# EUROPÄISCHE PATENTSCHRIFT

(11) **EP 0 713 499 B1**
(45) Veröffentlichungstag und Bekanntmachung des Hinweises auf die Patenterteilung: **25.02.1998**
(21) Anmeldenummer: 94924294.5
(22) Anmeldetag: 28.07.1994
(51) Int. Cl.: C08F 20/30, C08G 77/38, C09K 19/38, C09K 19/40

(54) **VERNETZUNGSFÄHIGE OLIGOMERE ODER POLYMERE MIT FLÜSSIGKRISTALLINEN FERROELEKTRISCHEN ODER ANTI-FERROELEKTRISCHEN EIGENSCHAFTEN**
CROSS-LINKABLE OLIGOMERS OR POLYMERS HAVING FERROELECTRIC OR ANTI-FERROELECTRIC LIQUID CRYSTAL PROPERTIES
OLIGOMERES OU POLYMERES RETICULABLES AYANT DES PROPRIETES DE LIQUIDES CRISTALLINS FERROELECTRIQUES OU ANTI-FERROELECTRIQUES

(30) Priorität: 14.08.1993 DE 4327359
(43) Veröffentlichungstag der Anmeldung: 29.05.1996
(73) Patentinhaber: BASF AKTIENGESELLSCHAFT, 67056 Ludwigshafen (DE)
(72) Erfinder: WAGENBLAST, Gerhard, D-67157 Wachenheim (DE); SIEMENSMEYER, Karl, D-67227 Frankenthal (DE); ZENTEL, Rudolf, D-55283 Nierstein (DE); BREHMER, Martin, D-55128 Mainz (DE)
(86) Internationale Anmeldenummer: EP9402490
(87) Internationale Veröffentlichungsnummer: WO9505407

(56) Entgegenhaltungen:
- EP-A- 0 291 427
- EP-A- 0 548 808
- WO-A-92/01764

## Beschreibung

Die Erfindung betrifft vernetzungsfähige, ferroelektrische oder antiferroelektrische, flüssigkristalline Eigenschaften aufweisende Oligomere oder Polymere gekennzeichnet durch eine Hauptkette, mindestens eine vernetzungsfähige Seitengruppe und mindestens eine Seitenkette mit chiraler Gruppe.

### Stand der Technik

Flüssigkristalline Netzwerke wurden von verschiedenen Autoren bereits beschrieben. Zu nennen sind hier die Arbeit von Broer et al. (Makromol. Chem. 190, 3202 (1989)), Finkelmann et al. (Makromol. Chem. Rapid Commun. 12, 717 (1989)) und Hikmet (Macromolecules, 25, 5759 (1992)).

Broer et al. beschreiben die Herstellung von flüssigkristallinen Netzwerken mit smektisch-, cholesterisch- oder nematisch flüssigkristallinem Verhalten. Sie gehen von niedermolekularen flüssigkristallinen Vorstufen aus, die keine, eine oder zwei polymerisierbare Einheiten tragen. Durch einen Photopolymerisationsprozeß innerhalb der flüssigkristallinen Phase erhalten sie ein Netzwerk, in dem die Eigenschaften des LC-Materials fixiert sind. Möglich ist auf diese Weise die Herstellung von Schichten für selektive Reflektoren für elektromagnetische Strahlung, die Herstellung polymerdispergierter Displays und nicht zuletzt auch die Herstellung von piezoelektrischen Materialien.

Finkelmann et al. beschreiben die Herstellung von hochorientierten LC-Netzwerken aus schwach vorvernetzten Polymeren, welche durch mechanische Kräfte orientiert werden und anschließend durch einen weiteren Vernetzungsschritt in dieser Orientierung fixiert werden. Die auf diese Weise hergestellten Materialien weisen im wesentlichen smektisch-, nematisch- und cholesterisch-flüssigkristalline Phasen auf.

Von R.A.M. Hikmet wird die Herstellung eines polar geordneten, ferroelektrischen Netzwerkes beschrieben. Dieses Netzwerk wird auf die gleiche Art und Weise hergestellt wie von Broer et al. beschrieben. Ausgehend von einer niedermolekularen Mischung von LC-Materialien, welche teilweise polymerisationsfähige Gruppen enthalten, wird durch einen Photopolymerisationsprozeß in der chiralen, polar geordneten ferroelektrisch flüssigkristallinen Phase ein Netzwerk erzeugt. Dieses Netzwerk weist piezoelektrische Eigenschaften auf.

In der Schrift WO 92/01764 werden siliciumhaltige, ferroelektrische, flüssigkristalline Copolymere beschrieben, welche in LCD-Anzeigen Verwendung finden. Diese Copolymeren zeichnen sich durch eine schnelle und reversible Orientierung in angelegten elektrischen Feldern aus.

Die Schriften EP-A 291 427 und EP-A 548 808 befassen sich mit flüssigkristallinen Polymeren, welche die mesogenen Gruppen in der Seitenkette tragen. Eine Fixierung dieser Gruppen - in EP-A 548 808 zum Teil mit chiralen Resten substituiert - durch polymerisierbare, an diese gebundene Reste ist in beiden Schriften nicht erwähnt.

Nachteilig für die Anwendung von Netzwerken die nach dem Verfahren von Broer et al. und Hikmet hergestellt werden, ist, daß in diesen Materialien Bestandteile vorhanden sind, die keine polymerisationsfähige Gruppe tragen und demzufolge löslich und migrationsfähig sind. Zum anderen ist es nur schwer möglich, Schichten auf flexiblen Substraten zu erzeugen, da die als Vorstufen eingesetzten niedermolekularen Materialien in der Regel eine sehr geringe Viskosität aufweisen, so daß eine gleichmäßige Schichtbildung auf flexiblen Substraten nicht oder nur schwer möglich ist.

Die Materialien von Finkelmann et al. dagegen weisen schon Eigenschaften eines Netzwerkes auf, welches quellbar, aber nicht mehr löslich ist und somit für die Standardverfahren zur Herstellung dünner Schichten, dem Spincoaten, Rakeln oder ähnlichem, nicht mehr geeignet sind.

Es besteht damit Bedarf an neuen, vernetzungsfähigen, ferroelektrischen oder antiferroelektrischen, flüssigkristalline Eigenschaften aufweisenden Oligomeren oder Polymeren, die die Nachteile des Standes der Technik nicht mehr aufweisen.

Aufgabe der vorliegenden Erfindung ist daher, Materialien zur Verfügung zu stellen, die vernetzbar sind, ferroelektrische oder antiferroelektrische flüssigkristalline Eigenschaften - auch nach der Vernetzung zu Polymeren - aufweisen, vor der Vernetzung in Standardlösungsmitteln gut löslich und nach der Vernetzung frei von löslichen Anteilen sind.

Die erfindungsgemäßen Verbindungen enthalten Einheiten der Formeln I und II 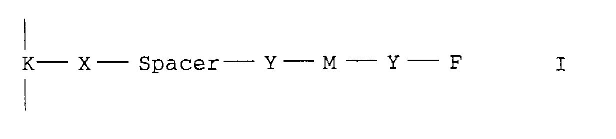 und 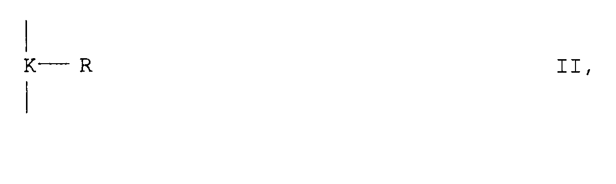 die über die Reste K zur Hauptkette verbunden sind und in denen die Reste
- K: gleiche oder verschiedene Glieder der Hauptkette,
- M: gleiche oder verschiedene mesogene Gruppen,
- F: chirale oder vernetzungsfähige Gruppen, wobei die vernetzungsfähigen Gruppen die Reste CH₂=CH-COO-, CH₂=C(CH₃)-COO-, CH₂=C(Cl)-COO-, CH₂=CH-CO(NH)-, CH₂=CH-CO(NCH₃)-, CH₂=CH-O- oder Hydroxystyrol enthalten,
- R: Wasserstoff, C₁- bis C₃₀-Alkyl, O-C₁- bis -C₃₀-Alkyl, 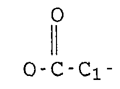 bis-C₃₀-Alkyl, COO-C₁- bis-C₃₀-Alkyl, Benzyl oder Phenyl,
- X: eine direkte Bindung, O, OCO, COO oder -C₆H₄O- und die Symbole
- Y: unabhängig voneinander eine direkte Bindung, O, OCO oder COO sind.

Die Reste K entsprechen insbesondere den Formeln 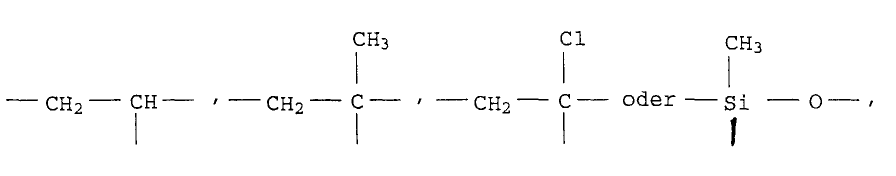 wobei die erste und die letzte Gruppe bevorzugt sind.

Als Spacer können alle für diesen Zweck bekannten Gruppen verwendet werden; üblicherweise sind die Spacer über Ester- oder Ethergruppen oder eine direkte Bindung mit K verknüpft. Die Spacer enthalten in der Regel 2 bis 30, vorzugsweise 2 bis 12 C-Atome und können in der Kette z.B. durch O, S, NH oder NCH₃ unterbrochen sein. Als Substituenten für die Spacerkette kommen dabei noch Fluor, Chlor, Brom, Cyan, Methyl oder Ethyl in Betracht.

Repräsentative Spacer sind beispielsweise:
(CH₂)ₙ, (CH₂CH₂O)ₘCH₂CH₂, CH₂CH₂SCH₂CH₂, CH₂CH₂NHCH₂CH₂, 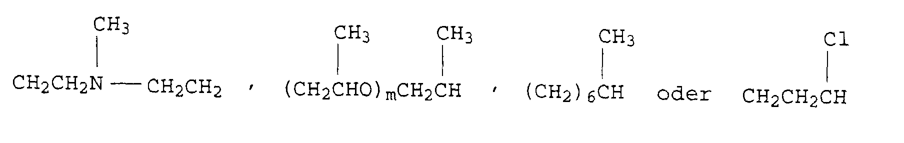 wobei
m 1 bis 3 und
n 1 bis 12 sind.

Alkylreste R sind beispielsweise C₁- bis C₃₀-Alkyl, vorzugsweise C₁- bis C₁₁-Alkyl, wobei davon auszugehen ist, daß die Reste R kürzerkettig als die Spacer sein sollen. Die Reste R können verzweigt, vorzugsweise aber linear sein; sie entsprechen z.B. den Formeln:
CₙH₂ₙ₊₁, COOCₙH₂ₙ₊₁, OCOCₙH₂ₙ₊₁, (OCH₂CH₂)ₘH, 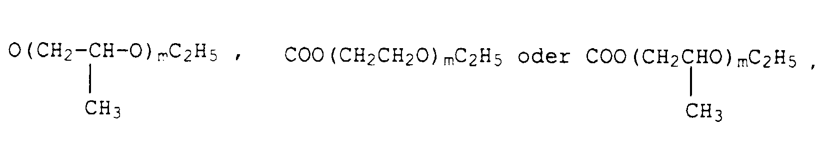 wobei m und n die angegebene Bedeutung haben.

Als Reste M können wiederum die bekannten mesogenen Gruppen verwendet werden. Insbesondere kommen aromatische oder heteroaromatische Gruppen enthaltende Reste in Betracht. Die mesogenen Reste entsprechen insbesondere der Formel III

(-A-Y¹)ᵣ-A III,

in der die Reste
- A: unabhängig voneinander ein Aromat oder Heteroaromat,
- Y¹: unabhängig voneinander O, COO, OCO, CH₂O, OCH₂, CH=N oder N=CH oder eine direkte Bindung und
- r: 1 bis 3 sind.

Vorzugsweise ist r 1 oder 2.

Die Reste A sind in der Regel aromatisch carbocyclische oder heterocyclische, gegebenenfalls durch Fluor, Chlor, Brom, Cyan, Hydroxy oder Nitro substituierte Ringsysteme, die z.B. folgenden Grundstrukturen entsprechen:

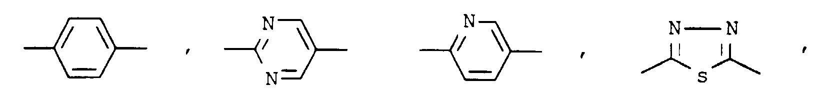

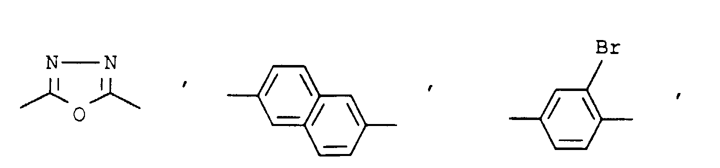

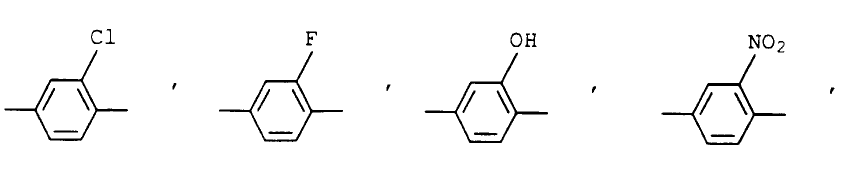

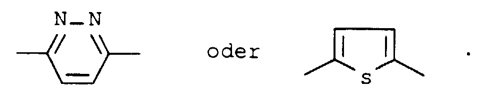

Besonders bevorzugt sind als mesogene Gruppen M z.B.: 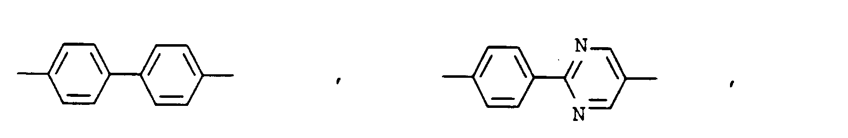 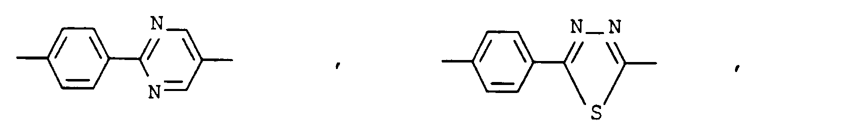 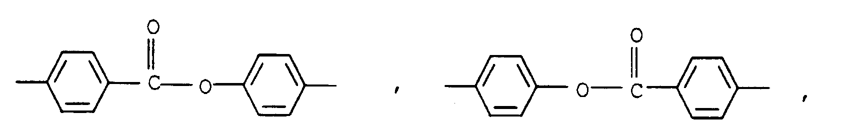 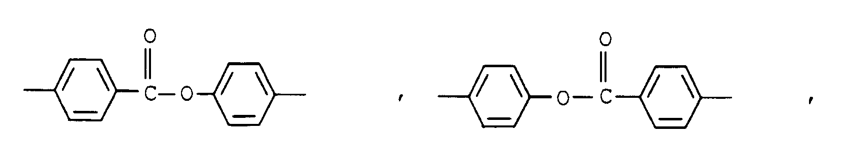 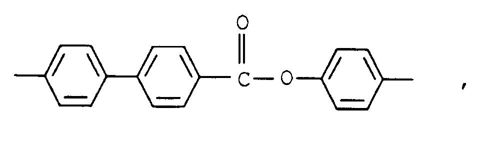 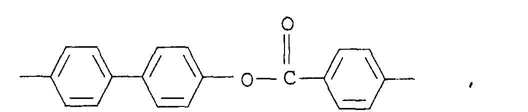 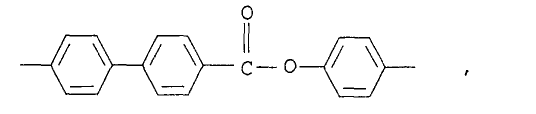 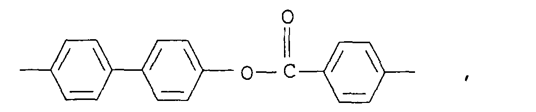 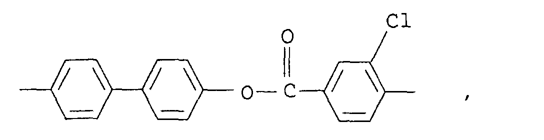 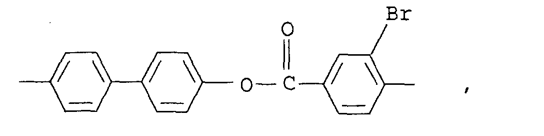 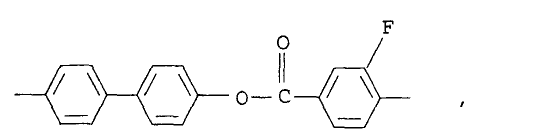 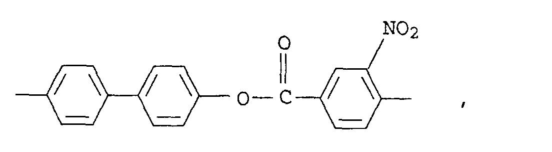 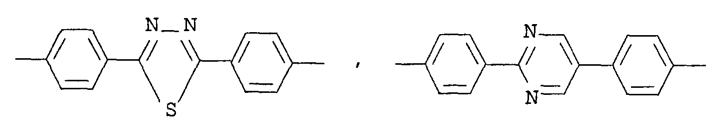 oder

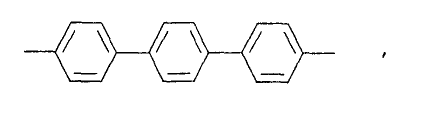

Handelt es sich bei den Gruppen F um chirale Gruppen,so haben diese mindestens ein asymmetrisches C-Atom.

Besonders geeignet sind Gruppen, die am chiralen C-Atom eine polare Gruppierung tragen und/oder zum Beispiel durch Ringbildung sterisch fixiert sind. Demgemäß seien beispielsweise genannt: 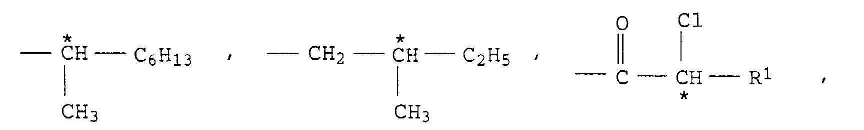 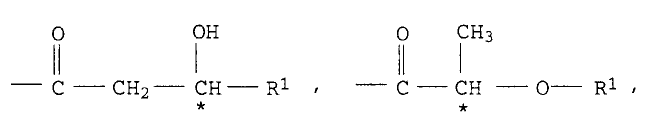 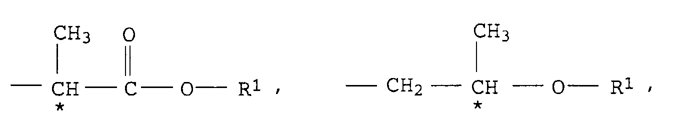 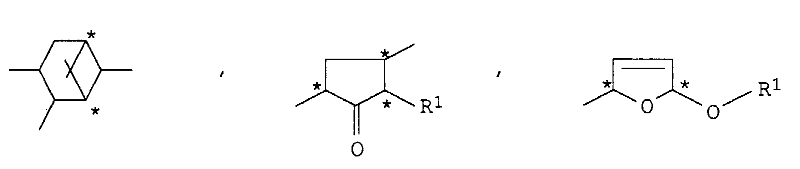 oder 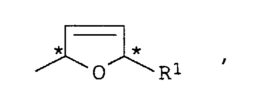 wobei R¹ ein C₁- bis C₁₂-Alkylrest ist, der chiral oder achiral sein kann.

Bevorzugte Reste R¹ sind z.B.: 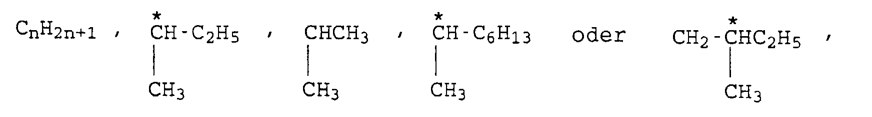 n ist dabei 1 bis 12.

Wenn die Gruppen F vernetzungsfähige, d.h. polymerisierbare Reste sind, können diese Reste entweder direkt oder über einen Spacer an die Gruppe Y gebunden sein. Dabei entsprechen die Begriffe Spacer und Y den Bedeutungen in Formel I.

Polymerisierbare Reste F sind z.B.:
CH₂=CH-COO-,
CH₂=C(CH₃)-COO-,
CH₂=C(Cl)-COO-,
CH₂=CH-CO(NH)-,
CH₂=CH-CO(NCH₃)- oder
CH₂=CH-O.

Besonders bevorzugt sind dabei
CH₂=CH-COO-,
CH₂=C(CH₃)-COO-,
CH₂=CH-CO(NH)- oder
CH₂=CH-CO(NCH₃)-.

Die Synthese der erfindungsgemäßen Oligomeren und Polymeren erfolgt nach allgemein in der Literatur beschriebenen Methoden.

Die Herstellung polymerisierbarer Acrylate mit chiralen Seitenketten als Vorstufe der erfindungsgemäßen Verbindungen kann nach allgemein bekannten Verfahren durchgeführt werden, wie sie z.B. in den US-Patentschriften 5,187,298 oder 4,844,835 beschrieben sind.

Die Herstellung eines zur Vernetzung befähigten Acrylates ist dann in zwei Stufen möglich. In einem ersten Reaktionsschritt kann ein polymerisierbares Acrylat, welches eine chirale Seitenkette trägt, mit einem weiteren polymerisierbaren Acrylat, das noch die Einführung einer polymerisierbaren Gruppe erlaubt, copolymerisiert werden. Dieses ist beispielhaft in der US 5 187 298 für Acrylatmonomere beschrieben und kann erfindungsgemäß ganz analog durchgeführt werden.

Die funktionalisierbare Gruppe, die die Einführung einer polymerisierbaren Gruppe erlaubt, ist in der Regel eine COO- oder OH-Gruppe, die nach üblichen Verfahren, z.B. Veresterungsreaktionen in Gegenwart von Dicyclohexylcarbodiimid (DCC), mit polymerisierbaren Einheiten umgesetzt werden kann.

Die Herstellung vernetzbarer Siloxane geschieht analog zur Herstellung von flüssigkristallinen Seitenkettensiloxanen (vgl. z.B. Poths et al. Adv. Mat. 4, (1992), 351). In einem ersten Syntheseschritt wird an das Hydrosiloxan eine mesogene Vorstufe, welche zum einen weiter funktionalisierbar ist und zum anderen eine endständige Vinylgruppe trägt, durch Insertion in die SiH-Bindung gebunden. In einer weiteren Reaktionsfolge werden an die funktionalisierbare Position der mesogenen Vorstufe, gegebenenfalls in einem Reaktionsschritt, die chirale und die polymerisierbare Gruppe, beispielsweise durch eine DCC-Veresterung angebunden.

Die erfindungsgemäßen Verbindungen eignen sich vorzugsweise zur Verwendung in flexiblen elektro-optischen Anzeigeelementen sowie in pyro- oder piezoelektrischen Anordnungen.

Die in den nachstehenden Beispielen verwendeten Abkürzungen haben folgende Bedeutung:
G: Glasphase
S_{c}*: chiral smektische, ferroelektrische Phase
S_{A}: smektische A Phase

Die Übergangstemperaturen wurden polarisationsmikroskopisch (Olympus BH 2 in Verbindung mit Mettler-Heizsystem FP90/82) sowie mittels DSC (Perkin Elmer DSC 7) bestimmt.

### Beispiel 1

### Umsetzung von Poly-(methyl-(4-undecylenoxy-4'-hydroxy-biphenylyl)-co-dimethyl)-siloxan mit 2S,3S-Chlorisovaleriansäure und Acrylamidohexansäure

1,0 g Poly-(methyl-(4-undecylenoxy-4'-hydroxy-biphenylyl)-co-dimethyl)-siloxan werden in 20 ml THF gelöst. Nach der Zugabe von 10 mg Diaminopyridin und 307,2 mg 2S,3S-Chlorisovaleriansäure (2,04 mmol) werden bei 0°C 5 ml Methylenchlorid und 420,9 mg Dicyclohexylcarbodiimid (DCC; 2,04 mmol) zugegeben und es wird über Nacht bei Raumtemperatur gerührt. Danach wird wiederum auf 0°C abgekühlt und es werden Acrylamidohexansäure (1,1 mmol) und 2 mg Dimethylaminopyridin im Reaktionsansatz gelöst. Nach Zugabe von weiteren 227,7 mg DCC wird weitere drei Stunden bei 0°C gerührt. Nach weiterem Rühren über Nacht bei Raumtemperatur wird der ausgefallene Harnstoff abfiltriert und das Polymer durch mehrfaches Umfällen aus THF mit Methanol gereinigt. Die Vollständigkeit der Umsetzung kann IR-spektroskopisch verfolgt werden.
Ausbeute: 0,68 g = 65 % d. Theorie
Funktionalisierungsgrad: 96 %

### Beispiel 2

### Umsetzung von Poly-(methyl-(4-undecylenoxy-4'-hydroxy-biphenylyl)-co-dimethyl)-siloxan mit 2S,3S-Chlorisovaleriansäure und 4-Vinyl-benzoesäure

1,0 g Poly-(methyl-(4-undecylenoxy-4'-hydroxy-biphenylyl)-co-dimethyl)-siloxan werden in 20 ml THF gelöst. Nach Zugabe von 10 mg Diaminopyridin und 307,2 mg 2S,3S-Chlorisovaleriansäure (2,04 mmol) werden bei 0°C 5 ml Methylenchlorid und 420,9 mg Dicyclohexylcarbodiimid (DCC; 2,04 mmol) zugegeben und es wird über Nacht bei Raumtemperatur gerührt. Danach wird wiederum auf 0°C abgekühlt und es werden 136 mg 4-Vinyl-benzoesäure (1,1 mmol) und 2 mg Dimethylaminopyridin im Reaktionsansatz gelöst. Nach Zugabe von weiteren 227,7 mg DCC wird weitere drei Stunden bei 0°C gerührt. Nach weiterem Rühren über Nacht bei Raumtemperatur wird der ausgefallene Harnstoff abfiltriert und das Polymer durch mehrfaches Umfällen aus THF mit Methanol gereinigt.

Die Vollständigkeit der Umsetzung kann IR-spektroskopisch verfolgt werden.
Ausbeute: 0,68 g = 65 % d. Theorie
Funktionalisierungsgrad: 96 %

### Beispiel 3

### Umsetzung von Poly-(methyl-(4-undecylenoxy-4'-hydroxy-biphenylyl)-co-dimethyl)-siloxan mit 2S,3S-Chlorisovaleriansäure und 3-(2S-chlor-propansäure)-1-propenoyl-sulfid

1,0 g Poly-(methyl-(4-undecylenoxy-4'-hydroxy-biphenylyl)-co-dimethyl)-siloxan werden in 20 ml THF gelöst. Nach Zugabe von 10 mg Diaminopyridin und 307,2 mg 2S,3S-Chlorisovaleriansäure (2,04 mmol) werden bei 0°C 5 ml Methylenchlorid und 420,9 mg Dicyclohexylcarbodiimid (DCC; 2,04 mmol) zugegeben und nach dem Rühren bei Nacht bei Raumtemperatur wird wiederum auf 0°C abgekühlt und es werden 213 mg 3-(2S-Chlor-propansäure)-1-propenoylsulfid (1,1 mmol) und 2 mg Dimethylaminopyridin im Reaktionsansatz gelöst. Nach Zugabe von weiteren 227,7 mg DCC wird weitere drei Stunden bei 0°C gerührt. Nach weiterem Rühren über Nacht bei Raumtemperatur wird der ausgefallene Harnstoff abfiltriert und das Polymer durch mehrfaches Umfällen aus THF mit Methanol gereinigt.

Die Vollständigkeit der Umsetzung kann IR-spektroskopisch verfolgt werden.
Ausbeute: 0,73 g = 69 % d. Theorie
Funktionalisierungsgrad: 96 %

### Beispiel 4

### Orientierung und Photopolymerisation des Produktes aus Beispiel 1:

Das flüssigkristalline Präpolymer wird in 10 ml Methylenchlorid gelöst und mit 2 Gew.-% eines Photoinitiators (z.B. 2,2-Dimethoxy-2-phenylacetophenon) versetzt. Hiernach wird das Lösungsmittel am Hochvakuum abgezogen. Die resultierende Mischung von Präpolymer und Photoinitiator wird dann im aufgeschmolzenen Zustand in eine mit einer leitfähigen, transparenten Schicht versehene, zusätzlich eine Orientierungsschicht enthaltende Glaszelle mit einem lichten Zwischenraum von 4 µm eingefüllt. Die Orientierung erfolgt durch langsames Abkühlen aus der isotropen Phase unter angelegtem elektrischen Feld. Eine Verbesserung der Orientierung erhält man, wenn mehrere Temperaturzyklen im Bereich zwischen 30°C und 60°C bei angelegtem elektrischen Feld (5 Hz, 400 Vpp) durchlaufen werden. Während dieser Prozedur kann direkt das ferroelektrische Schalten der Probe beobachtet werden. Die spontane Polarisation beträgt bei 40°C ca. 55 nC/cm². Die Schaltzeit weist einen Wert von 35 ms auf. Die Photopolymerisation der Probe erfolgt dann in der Weise, daß eine Gleichspannung von 200 V angelegt wird und bei angelegtem elektrischen Feld die Probe bei einer Temperatur von 40°C 1,5 h mit einer Spectronics ENF 260-C Leuchte bei 365 nm belichtet wird. Die Leistung der Lampe betrug ca. 6W, der Abstand zur Probe ca. 2 cm.

Das resultierende Netzwerk zeigt ein im Vergleich zum Präpolymer grundsätzlich unterschiedliches, asymmetrisches, d.h. nicht bistabiles Verhalten. Jener der beiden polaren Zustände, in dem die Photopolymerisation erfolgte, ist gegenüber dem anderen deutlich bevorzugt, d.h. das Material relaxiert leicht in den bevorzugten Zustand zurück.

### Beispiel 5

### Bestimmung des piezoelektrischen Koeffizienten des Polymeren I und des Netzwerkes

Auf die Zelle wird in Richtung der Zellnormalen mittels eines Piezotranslators ("Kraftgeber") der Fa. Physik Instrumente, Typ P-910.414, eine sinusförmige (30 Hz) Kraft F (Peak O-10N) appliziert, die mittels einer Kraftmeßdose, Typ 9203, und einem Ladungsverstärker, Typ 5011 (beide von der Fa. Kistler) gemessen wird.

Die im Material sinusförmig induzierten Ladungen Q werden an den Elektroden mittels eines Ladungsvertärkers Typ 5011 (Fa. Kistler) gemessen.

Für die Zelle gemäß Beispiel 4 wurde bei Raumtemperatur ein piezoelektrischer Koeffizient von d₃₃ = 4 pC/N gemessen. Der Piezoeffekt ist auch nach Erhitzen auf 55°C und Wiederabkühlen stabil.

Für das nicht vernetzte Material (Beispiel 1) konnte kein Piezosignal nachgewiesen werden.

## Patentansprüche

1. Vernetzungsfähige, ferroelektrische oder antiferroelektrische, flüssigkristalline Eigenschaften aufweisende Oligomere oder Polymere,
welche Einheiten der Formeln I und II 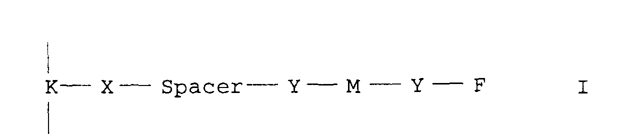 und 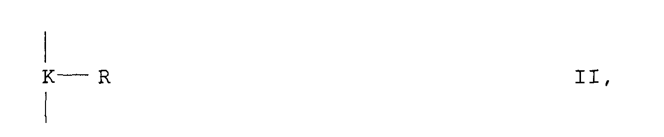 enthalten, die über die Reste K zur Hauptkette verbunden sind und in denen die Reste
K gleiche oder verschiedene Glieder der Hauptkette,
M gleiche oder verschiedene mesogene Gruppen,
F chirale oder vernetzungsfähige Gruppen, wobei die vernetzungsfähigen Gruppen die Reste CH₂=CH-COO-, CH₂=C(CH₃)-COO-, CH₂=C(Cl)-COO-, CH₂=CH-CO(NH)-, CH₂=CH-CO(NCH₃)-, CH₂=CH-O- oder Hydroxystyrol enthalten,
R Wasserstoff, C₁- bis C₃₀-Alkyl, O-C₁- bis -C₃₀-Alkyl, 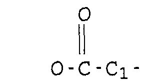 bis C₃₀-Alkyl, COO-C₁- bis -C₃₀-Alkyl, Benzyl oder Phenyl,
X eine direkte Bindung, O, OCO, COO oder -C₆H₄O- und die Symbole
Y unabhängig voneinander eine direkte Bindung, O, OCO oder COO sind,
mit der Maßgabe, daß die Oligomeren oder Polymeren eine Hauptkette, mindestens eine vernetzungsfähige Seitenkette und mindestens eine Seitenkette mit chiraler Gruppe enthalten.

2. Oligomere oder Polymere gemäß Anspruch 1, dadurch gekennzeichnet, daß die Hauptkette aus Vinylverbindungen oder Siloxanen aufgebaut ist.

3. Oligomere oder Polymere gemäß Anspruch 2, dadurch gekennzeichnet, daß zum Aufbau der Hauptkette als Vinylverbindungen Vinylether, Acryl- oder Methacrylverbindungen oder Vinylaromaten und als Siloxane solche mit Si-H-Bindungen verwendet werden.

4. Oligomere oder Polymere gemäß Anspruch 3, dadurch gekennzeichnet, daß als Vinylverbindungen Acryl- oder Methacrylsäureester aus mesogene Gruppen enthaltenden Alkoholen verwendet werden.

5. Oligomere oder Polymere gemäß Anspruch 4, dadurch gekennzeichnet, daß die eine mesogene Gruppe aufweisenden Alkohole nach dem Schema
HO-Spacer-mesogene Gruppe - funktionelle Gruppe
aufgebaut sind, wobei als funktionelle Gruppe eine chirale oder vernetzbare Gruppe enthalten ist.

6. Oligomere oder Polymere gemäß Anspruch 5, dadurch gekennzeichnet, daß als vernetzbare Gruppe Acrylsäureester, Acrylsäureamide oder Hydroxystyrole enthalten sind.

7. Oligomere oder Polymere gemäß Anspruch 3, dadurch gekennzeichnet, daß sie eine Siloxanhauptkette enthalten und durch Umsetzung von Si-H-Bindungen enthaltenden Siloxanen mit Vinylverbindungen der Struktur
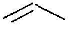 Spacer-mesogene Gruppe-funktionelle Gruppe
erhalten werden, wobei die funktionelle Gruppe eine chirale oder vernetzbare Gruppe ist.

8. Verfahren zur Herstellung von ferroelektrischen oder antiferroelektrischen, flüssigkristalline Eigenschaften aufweisenden, polar geordneten, vernetzten Polymeren, dadurch gekennzeichnet, daß man Oligomere oder Polymere,
welche Einheiten der Formeln Ia und II 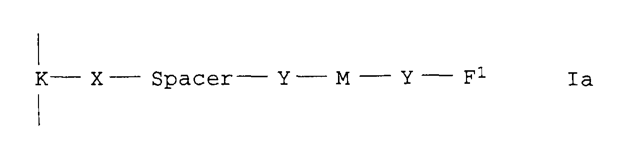 und 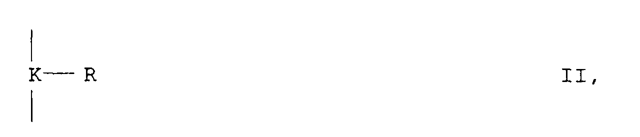 enthalten, die über die Reste K zur Hauptkette verbunden sind und in denen die Reste
K gleiche oder verschiedene Glieder der Hauptkette,
M gleiche oder verschiedene mesogene Gruppen,
F¹ chirale oder vernetzungsfähige Gruppen enthalten,
R Wasserstoff, C₁- bis C₃₀-Alkyl, O-C₁- bis -C₃₀-Alkyl, 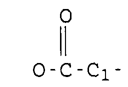 bis -C₃₀-Alkyl, COO-C₁- bis -C₃₀-Alkyl, Benzyl oder Phenyl,
X eine direkte Bindung, O, OCO, COO oder -C₆H₄O- und die Symbole
Y unabhängig voneinander eine direkte Bindung, O, OCO oder COO sind,
mit der Maßgabe, daß die Oligomeren oder Polymeren eine Hauptkette, mindestens eine vernetzungsfähige Seitenkette und mindestens eine Seitenkette mit chiraler Gruppe enthalten, ausrichtet und anschließend vernetzt.

9. Verfahren gemäß Anspruch 8, dadurch gekennzeichnet, daß man zur Ausrichtung mechanische Kräfte benutzt.

10. Verfahren gemäß Anspruch 8, dadurch gekennzeichnet, daß man zur Ausrichtung elektrische Felder benutzt.

11. Verfahren gemäß Anspruch 8, dadurch gekennzeichnet, daß man die Vernetzung photochemisch induziert.

12. Verwendung der gemäß Anspruch 8 hergestellten vernetzten Polymeren zur Herstellung von piezoelektrischen oder pyroelektrischen Bauelementen oder zur Erzeugung elektrostatischer Ladungsbilder.

13. Verwendung der gemäß Anspruch 8 hergestellten vernetzten Polymeren zur Herstellung von elektro-optischen Anzeigeelementen.

## Claims

1. A crosslinkable oligomer or polymer which has ferroelectric or antiferroelectric, liquid-crystalline properties and comprises units of the formulae I and II 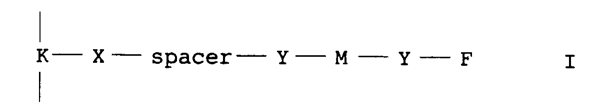 and 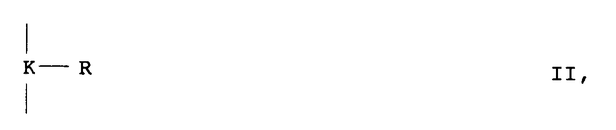 which are bonded to the main chain via the radicals K and in which
the radicals K are identical or different members of the main chain,
the radicals M are identical or different mesogenic groups,
the radicals F are chiral or crosslinkable groups, where the crosslinkable groups contain the radicals CH₂=CH-COO-, CH₂=C(CH₃)-COO-, CH₂=C(Cl)-COO-, CH₂=CH-CO(NH)-, CH₂=CH-CO(NCH₃)-, CH₂=CH-O- or hydroxystyrol,
R is hydrogen, C₁- to C₃₀-alkyl, O-(C₁- to C₃₀-alkyl), 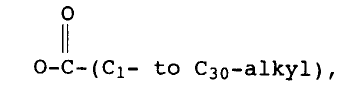 COO-(C₁- to C₃₀-alkyl), benzyl or phenyl,
X is a direct bond, O, OCO, COO or -C₆H₄O-, and
the symbols Y, independently of one another, are a direct bond, O, OCO or COO,
with the proviso that the oligomer or polymer contains a main chain, at least one crosslinkable side chain and at least one side chain containing a chiral group.

2. An oligomer or polymer as claimed in claim 1, wherein the main chain is built up from vinyl compounds or siloxanes.

3. An oligomer or polymer as claimed in claim 2, wherein the vinyl compounds used to build up the main chain are vinyl ether chain, acrylate or methacrylate compounds or vinylaromatic compounds, and the siloxanes used to build up the main chain are those containing Si-H bonds.

4. An oligomer or polymer as claimed in claim 3, wherein the vinyl compounds used are acrylates or methacrylates of alcohols containing mesogenic groups.

5. An oligomer or polymer as claimed in claim 4, wherein the alcohols containing mesogenic groups are built up as follows:
HO - spacer - mesogenic group - functional group
where the functional group is a chiral or crosslinkable group.

6. An oligomer or polymer as claimed in claim 5, wherein the crosslinkable group is an acrylate, acrylamide or hydroxystyrene.

7. An oligomer or polymer as claimed in claim 3, which contains a siloxane main chain and is obtained by reacting siloxanes containing Si-H bonds with vinyl compounds having the structure
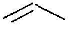 spacer - mesogenic group - functional group
where the functional group is a chiral or crosslinkable group.

8. A process for the preparation of the polar-ordered, crosslinked polymer having ferroelectric or antiferroelectric, liquid-crystalline properties, which comprises aligning and subsequently crosslinking an oligomer or polymer which comprises units of the formulae Ia and II 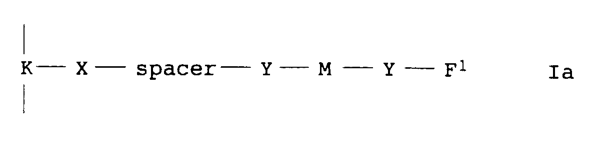 and 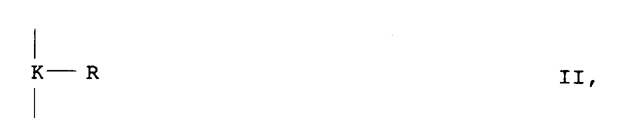 which are bonded to the main chain via the radicals K and in which
the radicals K are identical or different members of the main chain,
the radicals M are identical or different mesogenic groups,
the radicals F¹ are chiral or crosslinkable groups,
R is hydrogen, C₁- to C₃₀-alkyl, O-(C₁- to C₃₀-alkyl), 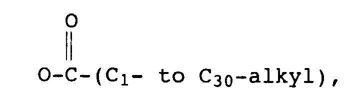 COO-(C₁- to C₃₀-alkyl), benzyl or phenyl,
X is a direct bond, O, OCO, COO or -C₆H₄O-, and
the symbols Y, independently of one another, are a direct bond, O, OCO or COO,
with the proviso that the oligomer or polymer contains a main chain, at least one crosslinkable side chain and at least one side chain containing a chiral group.

9. A process as claimed in claim 8, wherein the alignment is carried out using mechanical forces.

10. A process as claimed in claim 8, wherein the alignment is carried out using electric fields.

11. A process as claimed in claim 8, wherein the crosslinking is induced photochemically.

12. The use of a crosslinked polymer prepared as claimed in claim 8 for the production of piezoelectric or pyroelectric components or for reducing electrostatic charge images.

13. The use of a crosslinked polymer prepared as claimed in claim 8 for the production of electro-optical display elements.

## Revendications

1. Oligoméres ou polymères réticulables présentant des propriétés de cristaux liquides ferroélectriques ou antiferroélectriques,
qui contiennent des motifs de formules I et II 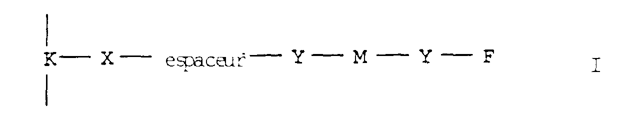 et 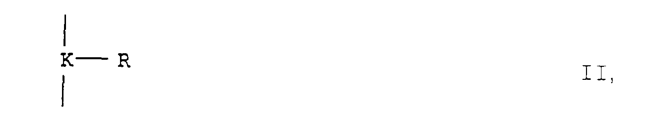 qui sont liés par les restes K à la chaîne principale et dans lesquels
K sont des chaînons identiques ou différents de la chaîne principale,
M sont des groupements mésogènes identiques ou différents,
F sont des groupements chiraux ou réticulables, les groupements réticulables contenant des restes CH₂=CH-COO-, CH₂=C(CH₃)-COO-, CH₂=C(Cl)-COO-, CH₂=CH-CO(NH)-, CH₂=CH-CO(NCH₃)-, CH₂=CH-O- ou hydroxystyréne,
R est un atome d'hydrogène ou un groupement alkyle en C₁-C₃₀, 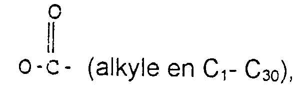 COO-(alkyle en C₁-C₃₀), benzyle ou phényle,
X est une liaison directe, O, OCO, COO ou -C₆H₄O- et les symboles
Y sont indépendamment les uns des autres des liaisons directes, O, OCO, COO,
pourvu que les oligoméres ou les polymères contiennent une chaîne principale, au moins une chaîne latérale réticulable et au moins une chaîne latérale avec des groupes chiraux.

2. Oligomères ou polymères selon la revendication 1, caractérisés en ce que la chaîne principale est composée de dérivés vinyliques ou de siloxanes.

3. Oligomères ou polymères selon la revendication 2, caractérisés en ce que, pour construire la chaîne principale, on utilise comme dérivés vinyliques des éthers vinyliques, des dérivés acryliques ou méthacryliques ou des composés vinylaromatiques et comme siloxanes les mêmes avec des liaisons Si-H.

4. Oligoméres ou polymères selon la revendication 3, caractérisés en ce qu'on utilise comme dérivés vinyliques des acrylates ou méthacrylates d'alcools contenant des groupements mésogènes.

5. Oligoméres ou polymères selon la revendication 4, caractérisés en ce que les alcools contenant un groupement mésogène sont construits selon le schéma
HO-espaceur-groupement mésogéne-groupement fonctionnel
et contiennent comme groupement fonctionnel un groupement chiral ou réticulable.

6. Oligomères ou polymères selon la revendication 5, caractérisés en ce qu'ils contiennent comme groupements réticulables des acrylates, des acrylamides ou des hydroxystyrènes.

7. Oligomères ou polymères selon la revendication 3, caractérisés en ce qu'ils contiennent une chaîne principale siloxane et sont obtenus par réaction de siloxanes contenant des liaisons Si-H avec des dérivés vinyliques de formule
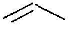 espaceur-groupement mésogène-groupement fonctionnel,
le groupement fonctionnel étant un groupement chiral ou réticulable.

8. Procédé de préparation de polymères réticulés, à orientation polaire, présentant des propriétés de cristal liquide ferroélectriques ou antiferroélectriques, caractérisé en ce qu'on obtient et on réticule ensuite des oligomères ou des polymères
qui contiennent des motifs de formules I et II 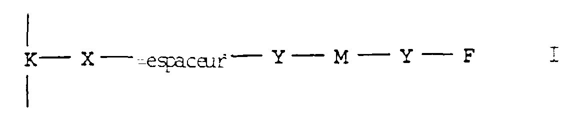 et 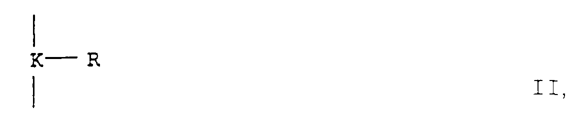 qui sont liés par les restes K à la chaîne principale et dans lesquels
K sont des chaînons identiques ou différents de la chaîne principale,
M sont des groupements mésogènes identiques ou différents,
F sont des groupements chiraux ou réticulables, les groupements réticulables contenant des restes CH₂=CH-COO-, CH₂=C(CH₃)-COO-, CH₂=C(Cl)-COO-, CH₂=CH-CO(NH)-, CH₂=CH-CO(NCH₃)-, CH₂=CH-O- ou hydroxystyréne,
R est un atome d'hydrogène ou un groupement alkyle en C₁-C₃₀, 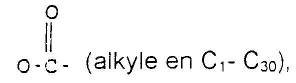 COO-(alkyle en C₁-C₃₀), benzyle ou phényle,
X est une liaison directe, O, OCO, COO ou -C₆H₄O- et les symboles
Y sont indépendamment les uns des autres des liaisons directes, O, OCO, COO,
pourvu que les oligomères ou les polymères contiennent une chaîne principale, au moins une chaîne latérale réticulable et au moins une chaîne latérale avec des groupes chiraux.

9. Procédé selon la revendication 8, caractérisé en ce qu'on utilise pour l'obtention des forces mécaniques.

10. Procédé selon la revendication 8, caractérisé en ce qu'on utilise pour l'obtention des champs électriques.

11. Procédé selon la revendication 8, caractérisé en ce qu'on induit la réticulation par voie photochimique.

12. Utilisation des polymères réticulés préparés selon la revendication 8 pour la fabrication d'éléments structurels piézoélectriques ou pyroélectriques ou pour la production d'images de charges électrostatiques.

13. Utilisation des polymères réticulés préparés selon la revendication 8 pour la fabrication de dispositifs d'affichage électro-optiques.
